# EUROPÄISCHE PATENTSCHRIFT

(11) **EP 2 608 915 B1**
(45) Veröffentlichungstag und Bekanntmachung des Hinweises auf die Patenterteilung: **02.11.2016**
(21) Anmeldenummer: 11725102.5
(22) Anmeldetag: 16.06.2011
(51) Int. Cl.: B23D 15/14, H01H 39/00

(54) **ELEKTRISCHE TRENNVORRICHTUNG SOWIE VERFAHREN ZUM ELEKTRISCHEN TRENNEN VON ANSCHLUSSTEILEN MIT HILFE EINER TRENNVORRICHTUNG**
ELECTRICAL DISCONNECTING DEVICE AND METHOD FOR THE ELECTRICAL ISOLATION OF CONNECTING PARTS WITH THE AID OF AN ISOLATING DEVICE
DISPOSITIF DE SÉPARATION ÉLECTRIQUE ET PROCÉDÉ DE SÉPARATION ÉLECTRIQUE D'ÉLÉMENTS DE RACCORDEMENT À L'AIDE D'UN DISPOSITIF DE SÉPARATION

(30) Priorität: 27.08.2010 DE 102010035684
(43) Veröffentlichungstag der Anmeldung: 03.07.2013
(73) Patentinhaber: Auto-Kabel Management GmbH, 79688 Hausen i.W. (DE)
(72) Erfinder: HENTSCHEL, Wolfgang, 79650 Schopfheim (DE); SPRENGER, Oliver, 33154 Salzkotten (DE); GRONWALD, Frank, 50181 Bedburg (DE)
(74) Vertreter: Cohausz & Florack
(86) Internationale Anmeldenummer: PCT/EP2011/059986
(87) Internationale Veröffentlichungsnummer: WO 2012/025272

(56) Entgegenhaltungen:
- DE-A1-102007 051 504
- FR-A5- 2 079 538
- FR-A5- 2 086 922
- US-A- 3 369 296
- US-A- 3 848 099

## Beschreibung

Der Gegenstand betrifft eine elektrische Trennvorrichtung mit einem ersten Anschlussteil, einem zweiten Anschlussteil, einer im geschlossenen Zustand einen Strompfad zwischen dem ersten und dem zweiten Anschlussteil bildenden, räumlich zwischen den Anschlussteilen liegenden Trennstelle, wobei die Trennstelle im getrennten Zustand den Strompfad zwischen den Anschlussteilen trennt, und einem ein Trennen der Trennstelle beeinflussenden Hilfsantrieb. Darüber hinaus betrifft der Gegenstand ein Verfahren zum Trennen der Anschlussteile sowie eine Hochvoltelektroinstallation als auch ein Elektrofahrzeug mit einer solchen Trennvorrichtung.

Eine solche Vorrichtung wird vom US 3848099 A offenbart. Elektrische Trennvorrichtungen, insbesondere für Batterieleitungen von Kraftfahrzeugen, sind allgemein bekannt. Beispielsweise ist aus der DE 10 2004 023 415 A1 eine pyrotechnisch angetriebene Trennvorrichtung zum Trennen einer Trennstelle bekannt. Bei der dort beschriebenen Trennvorrichtung wird ein Trennmeißel mittel eines pyrotechnischen Hilfsantriebs in Richtung einer Trennstelle beschleunigt, derart, dass der Trennmeißel die Trennstelle durchstoßen kann. Die Trennstelle ist hierbei eine Verjüngung zwischen zwei Anschlussteilen. Nachteilig hierbei ist jedoch, dass zwischen dem pyrotechnischen Hilfsantrieb und dem Trennmeißel ein Gasvolumen angeordnet ist, welches kompressibel ist. Hierdurch kann es dazu kommen, dass nicht die gesamte Energie des pyrotechnischen Hilfsantriebs schlagartig auf den Trennmeißel übertragen wird und die Trennung eventuell nicht funktioniert.

Darüber hinaus ist bei heutigen Hochvoltanwendungen, insbesondere in 48 Volt Netzen, als auch in Antriebsnetzen von Fahrzeugen, bei denen der Antrieb des Fahrzeugs elektrisch erfolgt, beispielsweise in Antriebsnetzen mit über 100 Volt, das Trennen der Leitungen insofern problematisch, als sich beim Trennen der Leitungen Lichtbögen über den Spalt 24 an der Trennstelle ausbilden und die elektrische Trennung somit nicht vollständig ist. Diese Lichtbögen können über mehrere Sekunden brennen, während dessen die Anschlussteile zumindest teilweise elektrisch miteinander verbunden bleiben und Strom über die Trennstelle fließt. Dieses Problem ist bei der genannten Veröffentlichung ebenfalls gegeben.

Aus diesem Grunde lag dem Gegenstand die Aufgabe zugrunde, eine elektrische Trennvorrichtung zur Verfügung zu stellen, welche eine sichere Trennung bei einem gering dimensionierten Hilfsantrieb gewährleistet. Eine weitere Aufgabe war es, dass Trennen unter Vermeidung von Lichtbögen zu ermöglichen.

Diese und andere Aufgaben werden gegenständlich durch eine elektrische Trennvorrichtung nach Anspruch 1 gelöst.

Die elektrische Trennvorrichtung weist zwei Anschlussteile auf. Die Anschlussteile können zum Anschluss an elektrische Leitungen und Kabel geformt sein und Kabelschuhe zur Aufnahme der Kabel aufweisen. Auch können die Anschlussteile in ein Bordnetz integriert sein. Über die Anschlussteile und eine Trennstelle fließt im geschlossenen Zustand der Trennvorrichtung ein elektrischer Strom zwischen einem Verbraucher und einer Stromquelle. Insbesondere ist der Verbraucher ein Elektromotor und die Stromquelle die Elektrobatterie die den Elektromotor treibt. Dies ist insbesondere bei der Verwendung von Batterien für Hybridfahrzeuge oder für reine Elektrofahrzeuge denkbar.

Im Fall eines Unfalls oder eines sonstigen Schadenfalls muss sichergestellt werden, dass die Batterie von dem Verbraucher getrennt wird und somit eine Gefährdung für Rettungspersonen oder Insassen reduziert ist. Dies ist insbesondere bei der Verwendung von Hochvoltbatterien für Elektrofahrzeuge oder Hybridfahrzeuge von besonderem Interesse, da hier Spannungen von über 50 Volt, vorzugsweise über 100 Volt an den Batteriepolen anliegen können. Solche Spannungen zusammen mit den durch die Batterien zur Verfügung gestellten extrem hohen Strömen bedeuten ein enormes Risiko für Insassen als auch Rettungspersonen.

Um ein sicheres Trennen zu gewährleisten, wird vorgeschlagen, dass ein durch den Hilfsantrieb getriebenes, fließfähiges Medium derart angeordnet ist, dass es die Trennstelle zumindest im Moment des Trennens zumindest teilweise umgibt.

Das fließfähige Medium weist vorzugsweise die Eigenschaft auf, dass es inkompressibel ist. Durch den Hilfsantrieb wird das fließfähige Medium so in Richtung der Trennstelle gedrückt, dass es die Trennstelle aufbricht und die Trennstelle umgibt. Dadurch, dass das fließfähige Medium vorzugsweise inkompressibel ist, ist es möglich, den Hilfsantrieb möglichst kein zu gestalten. Die gesamte Energie des Hilfsantriebs wird unmittelbar auf die Trennstelle ausgeübt.

Dadurch, dass das fließfähige Medium die Trennstelle im Moment des Trennens zumindest teilweise umfließt, wird sichergestellt, dass sich in den sich zwischen den beiden Anschlussteilen bildenden Luftspalt das fließfähige Medium ausbreitet. Hierdurch kann ein Entstehen eines Lichtbogens unterdrückt oder ein entstandener Lichtbogen gelöscht werden.

Das fließfähige Medium übt einen die Trennung bewirkenden Druck und/oder Impuls auf die Trennstelle aus und kann unmittelbar vor dem Trennen an der Trennstelle anliegen .

Das fließfähige Medium wird durch den Hilfsantrieb in Richtung der Trennstelle gedrückt, so dass es einen Druck auf die Trennstelle ausüben kann der so groß ist, dass die Trennstelle aufbricht. Die Druckfestigkeit der Trennstelle kann derart ausgelegt sein, dass sie unterhalb des von dem fließfähigen Medium ausgeübten Drucks liegt, der entsteht, wenn der Hilfsantrieb aktiviert worden ist.

Auch kann das fließfähige Medium mit einem Impuls auf die Trennstelle beschleunigt sein, so dass der Impuls des fließfähigen Mediums das Aufbrechen der Trennstelle bewirkt. In beiden Fällen wird der Strompfad zwischen den Anschlussteilen über die Trennstelle getrennt. Das fließfähige Medium umfließt im Wesentlichen Teile der Trennstelle und bewirkt somit ein Unterdrücken oder Löschen eines entstehenden Lichtbogens.

Das fließfähige Medium kann im Moment des Trennens und/oder unmittelbar vor dem Trennen an der Trennstelle anliegen, diese insbesondere berühren. In diesem Fall befindet sich zwischen dem fließfähigen Medium und der Trennstelle im Moment des Trennens kein kompressibles Gas, so dass das fließfähige Medium unmittelbar an der Trennstelle anliegt und der Impuls des fließfähigen Mediums unmittelbar auf die Trennstelle wirkt. Hierdurch wird ein besonderes sicheres Trennen der Trennstelle bewirkt.

Das fließfähige Medium wird durch den Hilfsantrieb in Richtung der Trennstelle die Trennung bewirkend beschleunigt. Der Hilfsantrieb wird aktiviert und übt eine Kraft auf das fließfähige Medium aus. Diese Kraft führt zu einer Beschleunigung des fließfähigen Mediums, welche dazu führt, dass das fließfähige Medium in Richtung der Trennstelle beschleunigt wird. Das beschleunigte fließfähige Medium weist einen Impuls auf, der so groß ist, dass er die Trennung der Trennstelle bewirken kann.

Das fließfähige Medium ist in einem Führungsgehäuse angeordnet. Das Führungsgehäuse kann einen Kanal zwischen dem Hilfsantrieb und der Trennstelle bilden, in dem das Medium angeordnet sein kann. Das fließfähige Medium ist in dem Führungsgehäuse zwischen der Trennstelle und dem Hilfsantrieb und/oder an einer dem Hilfsantrieb abgewandten Seite der Trennstelle angeordnet

Es ist möglich, dass zwischen der Trennstelle und dem Hilfsantrieb das fließfähige Medium angeordnet ist. Nacht einer Aktivierung des Hilfsantriebs wird ein Druck in Richtung der Trennstelle auf das fließfähige Medium ausgeübt und/oder wird das fließfähige Medium in Richtung der Trennstelle beschleunigt. Die Energie des Hilfsantriebs wird somit in Richtung der Trennstelle durch das fließfähige Medium geleitet, wodurch eine Trennung der Trennstelle erfolgt.

Der Hilfsantrieb bewirkt eine Trennung der Trennstelle und in dem Moment, in dem die Trennstelle aufbricht, gibt das fließfähige Medium diese zumindest teilweise auf der abgewandten Seite der Trennstelle um und ebenfalls löscht den entstehenden Lichtbogen oder unterdrückt das Entstehen eines Lichtbogens.

Der Hilfsantrieb kann sowohl eine in Richtung der Trennstelle gerichtete Kraft als auch eine von der Trennstelle weggerichtete Kraft ausüben. Beispielsweise kann der Hilfsantrieb explodieren oder implodieren. Im Falle des Explodierens ist die Kraft in Richtung der Trennstelle gerichtet und das fließfähige Medium wird in Richtung der Trennstelle beschleunigt oder die Trennstelle wird aufgebrochen und das fließfähige Medium befindet sich auf der dem Hilfsantrieb abgewandten Seite der Trennstelle. Beim Implodieren ist es möglich, dass durch die Implosionskraft ein Unterdruck im Führungsgehäuse entsteht, durch den die Trennstelle aufgebrochen wird und dass auf der dem Hilfsantrieb abgewandten Seite der Trennstelle angeordnete fließfähige Medium die Trennstelle umgibt.

Auch wird vorgeschlagen, dass das fließfähige Medium eine Flüssigkeit oder ein rieselfähiges Schüttgut, insbesondere Sand, ist und/oder dass das fließfähige Medium flüssig, pastös, schaumförmig, gelförmig oder gekörnt ist.

Es hat sich gezeigt, dass unterschiedliche Medien für die gegenständliche Trennung verwendet werden können. Wesentlich ist, dass die Medium fließfähig sind und insbesondere inkompressibel Medien sind für die gegenständliche Lösung geeignet. Inkompressibel Medien sind insbesondere Flüssigkeiten oder rieselfähige Schüttgüter, die insbesondere im Wesentlichen inkompressibel sind. Jedoch sind auch rieselfähige Schüttgüter verwendbar, die teilweise kompressibel sind. Ein mögliches Medium, welches verwendet werden kann, ist Sand. Sand weist hervorragende Löscheigenschaften auf und ist somit besonders geeignet, den Lichtbogen zu löschen.

Auch können flüssige, pastöse, schaumförmige oder gelförmige Medien zum Einsatz kommen. So ist es beispielsweise möglich, dass Silikone zum Einsatz kommen. Silikone sind gelförmig und/oder pastös. Das zum Einsatz kommende Silikon weist vorzugsweise eine hohe Temperaturfestigkeit auf. Die Verwendung von Silikon als fließfähiges Medium ist insbesondere aufgrund seiner isolierenden und wärmeleitenden Eigenschaft besonders vorteilhaft. Auch hat das Silikon eine besonders gute Lichtbogen-löschende Eigenschaft.

Als elektrischer Isolator ist Silikon besonders vorteilhaft, da es die Trennstelle nach dem Trennen besonders sicher isoliert und verhindert, dass ein Stromfluss über das Silikon zwischen den Anschlussteilen stattfindet.

Im Betrieb ist die Verwendung von Silikon insbesondere aus dem Grund vorteilhaft, weil es gute wärmeleitende Eigenschaften hat. Bei hohen Strömen über die Trennstelle wird diese durch ohmische Verluste erhitzt. Bei einem Silikon, welches die Trennstelle umgibt, kann diese Wärmeenergie dann besonders gut abgeleitet werden, wenn das Silikon eine gute Wärmeleiteigenschaft hat. Das führt dazu, dass die Trennstelle besser gekühlt ist, als wenn sie beispielsweise von Luft umgeben wäre. Hierdurch wird erreicht, dass die Stromtragfähigkeit der Trennstelle deutlich erhöht wird.

Im Trennungsfall wird die Trennstelle geöffnet und bei hohen Strömen kann ein Lichtbogen entstehen. Wenn Silikon zum Einsatz kommt, welches als fließfähiges Medium zwischen die Trennstelle fließt, kann durch das Silikon ein Löschen des Lichtbogens erreicht werden. Das Silikon hat vorzugsweise eine selbstverlöschende Eigenschaft und ist schwer brennbar. Bei einem Flammpunkt von über 400°, vorzugsweise über 600°, besonders bevorzugt von über 700°, beispielsweise bei 750° und einer Zündtemperatur von über 300°, vorzugsweise über 400°, besonders bevorzugt bei 450°, ist das Silikon als schwer brennbar zu bezeichnen. Auch hat das Silikon einen geringen Sauerstoffanteil und sein Sauerstoffindex (LOI) mit über 15 %, vorzugsweise über 20 %, besonders bevorzugt über 25 %.

Im Bereich des zu löschenden Lichtbogens bildet sich durch das Silikon nur ein geringer Anteil an Rauch. Die Verbrennungsgase sind im Wesentlichen Kohlendioxid und Wasser ohne toxische Gase. Das Verbrennungsprodukt kann ein Siliziumoxid sein, welches als Dielektrikum besonders gut elektrisch isolierend wirkt.

Die Flammhemmung und das Flammverhalten von Silikon kann durch Zusätze von AL (OH₃) sowie TIO₂ verbessert werden.

Rein beispielhaft kann als fließfähiges Medium SIL-Gel^{R} 612 der Firma Wacker Chemie AG angegeben werden. Es hat eine Viskosität von ca. 1000 mPas bei 23° und eine Dichte von ca. 0,9 g/cm³.

Auch kann das Produkt Elastosil^{R} RT745 der Firma Wacker Chemie AG zum Einsatz kommen, welches die gleiche Viskosität und die gleiche Dichte aufweist.

Als weiteres Beispiel eines möglichen Silikongels ist das Produkt RAKU-SIL^{R} 10-S12/3-2 vorgeschlagen. Auch dieses Produkt hat eine Viskosität zwischen 5.000 und 11.000 mPas bei einer Dichte von 0,98 g/ml.

Insbesondere für elektrische Trennvorrichtungen im Automobilbau ist die Alterungseigenschaft des fließfähigen Mediums von entscheidender Bedeutung. Das fließfähige Medium muss im Zweifel über die gesamte Lebensdauer eines Fahrzeugs die gleichen mechanischen Eigenschaften behalten, insbesondere muss die Viskosität gleichbleibend gut sein. Dies ist bei den genannten Produkten der Fall. Wesentlich ist, dass das Silikongel alterungsbeständig ist. Insbesondere hat das Silikongel gleiche mechanische Eigenschaften zwischen -40°C und +150°C.

Das verwendete Medium kann beispielsweise in einem Temperaturbereich von -40° bis +150° flüssig oder gelförmig sein. Insbesondere bei niedrigen Temperaturen muss das fließfähige Medium bei der Verwendung in Elektrofahrzeugen noch fließfähig sein. Es darf nicht dazu kommen, dass das fließfähige Medium bei -40° seinen Aggregatzustand in fest ändert, da ansonsten das Trennen der Trennstelle gefährdet ist.

Das fließfähige Medium hat insbesondere eine Viskosität zwischen 0,2 und 1*10^5, besonders bevorzugt zwischen 0,2 und 1000 oder auch über 1000. Die Viskosität ist in der Regel in mPa*s gemessen. Das fließfähige Medium ist bevorzugt viskos und/oder rieselfähig. Vorzugsweise ist das Medium aus einen Zweikomponentengemisch, welches im vermischten Zustand die genannte Viskosität besitzt.

Gemäß einem vorteilhaften Ausführungsbeispiel wird vorgeschlagen, dass das fließfähige Medium elektrisch isolierende Eigenschaften aufweist und/oder eine Lichtbogen löschende Eigenschaften aufweist. Wie bereits erwähnt, ist Sand besonders geeignet, Lichtbögen zu löschen. Auch Silikone sind besonders geeignet, Lichtbögen zu löschen. Silikone weisen auch isolierende Eigenschaften auf. In der Fachwelt sind weitere Materialien bekannt, die sowohl fließfähig sind, als auch gute elektrische Isolatoren sind.

Gemäß einem vorteilhaften Ausführungsbeispiel wird vorgeschlagen, dass der Hilfsantrieb ein pyrotechnischer Hilfsantrieb oder ein mechanischer Hilfsantrieb ist. Auch wird vorgeschlagen, dass der Hilfsantrieb einen Unterdruck oder Überdruck in dem Führungsgehäuse nach seiner Aktivierung bewirkt.

Ein pyrotechnischer Hilfsantrieb ist gekennzeichnet durch eine pyrotechnische Treibladung, die bei Auslösung einen Druckimpuls zur Generierung eines Druckimpulses zum Antrieb des fließfähigen Mediums erzeugt. Das Auslösen des pyrotechnischen Hilfsantriebs kann über eine Zündleitung erfolgen.

Ein mechanischer Hilfsantrieb kann beispielsweise ein Schaum sein, der bei Kontakt mit einem anderen Material, beispielsweise Wasser, schnell expandiert und somit einen Druckimpuls auf das fließfähige Medium zum Trennen der Trennstelle ausübt. Auch kann eine starke gespannte Feder als mechanischer Hilfsantrieb verwendet werden. Andere mechanische Hilfsantriebe sind ebenfalls möglich.

Wie bereits zuvor erwähnt, kann der Hilfsantrieb einen Unter- oder Überdruck in dem Führungsgehäuse nach seiner Aktivierung auslösen. Implodierende oder explodierende Hilfsantriebe sind beispielsweise möglich. Je nachdem, ob ein Überdruck oder Unterdruck ausgeübt wird, kann das fließfähige Medium zumindest entweder auf der dem Hilfsantrieb zugewandten Seite oder der dem Hilfsantrieb abgewandten Seite der Trennstelle angeordnet sein. Wesentlich ist, dass das fließfähige Medium den Hilfsantrieb nach der Trennung bzw. in dem Moment des Trennens zumindest teilweise umgibt.

Gemäß einem vorteilhaften Ausführungsbeispiel wird vorgeschlagen, dass ein Führungsgehäuse einen zwischen Hilfsantrieb und Trennstelle und/oder einen auf einer dem Hilfsantrieb abgewandten Seite der Trennstelle angeordneten Raum aufweist. Ein Führungsgehäuse kann vorgesehen sein, in dem der Hilfsantrieb zusammen mit dem fließfähigen Medium der Trennstelle angeordnet ist. Zwischen dem Hilfsantrieb und der Trennstelle kann in dem Führungsgehäuse ein Raum, z.B. ein Kanal, angeordnet sein. In diesem Raum kann das fließfähige Medium angeordnet sein. Auch ist es möglich, dass auf der dem Hilfsantrieb abgewandten Seite der Trennstelle ein Raum angeordnet ist. Auch hier kann das fließfähiges Medium angeordnet sein. Das fließfähige Medium kann sowohl vor als auch hinter der Trennstelle, ausgehend vom Hilfsantrieb, angeordnet sein. Der Raum hinter der Trennstelle kann größer sein, als der Raum vor der Trennstelle und so dimensioniert sein, dass sich die Trennstelle im Moment des Trennens in den dem Hilfsantrieb abgewandten Raum ausbreiten kann.

Wie bereits zuvor erläutert, wird vorgeschlagen, dass in dem Raum zumindest teilweise das fließfähige Medium angeordnet sein kann. Es ist bevorzugt, dass zwischen Hilfsantrieb und Trennstelle möglichst wenig Gas angeordnet ist. Hierdurch wird sichergestellt, dass die Energie des Hilfsantriebs möglicht ungedämpft auf das fließfähige Medium wirkt und somit ein sicheres Trennen erfolgen kann. Dadurch, dass der Raum durch das fließfähige Medium gefüllt ist, kann dieses die Trennstelle im Moment des Trennens umgeben.

Gemäß einem vorteilhaften Ausführungsbeispiel wird vorgeschlagen, dass im Bereich des Raumes eine Entlüftungsöffnung vorgesehen ist, über die ein im Raum eingeschlossenes Gas bei einem Überdruck entweicht. Die Lüftungsöffnung kann sowohl im Raum zwischen Hilfsantrieb und Trennstelle als auch im Raum der dem Hilfsantrieb abgewandten Seite der Trennstelle angeordnet sein. Die Lüftungsöffnung kann auch zwischen fließfähigem Medium und Trennstelle angeordnet sein, so dass ein Gasvolumen, welches zwischen Medium und Trennstelle vorhanden sein kann, im Moment des Auslösens durch die Entlüftungsöffnung entweichen kann.

Der Raum, der auf der dem Hilfsantrieb abgewandten Seite der Trennstelle angeordnet ist, kann zweigeteilt sein. Hierbei kann eine Trennschicht/Trennwand, beispielsweise ein dünnes Blech, ein mit einem Isolator beschichtetes Blech, eine Kunststoffplatte oder der gleichen, den Raum zweiteilen. Vorzugsweise ist der Raum derart zweigeteilt, dass die Trennschicht einen Raum bildet, der nicht an der Trennstelle anliegt und einen weiteren Raum, der an der Trennstelle anliegt. Der Raum, der nicht an der Trennstelle anliegt, kann mit der Entlüftungsöffnung versehen sein. Der an der Trennstelle anliegende Raum kann dann auch mit dem fließfähigen Medium befüllt sein. Durch die Trennwand wird bewirkt, dass das fließfähige Medium im Ruhezustand nicht aus der Entlüftungsöffnung austritt. Im Aktivierungsfall, das heißt wenn der Hilfsantrieb zündet, kann das fließfähige Medium die Trennstelle durchtrennen. Das dann in den an der Trennstelle anliegenden Raum eintretende fließfähige Medium kann zunächst nicht entweichen. Die Trennwand wird durch die Zündenergie des Hilfsantriebs und den Druck des fließfähigen Mediums ebenfalls im Aktivierungsfall durchtrennt und es entsteht eine Fluidkommunikation zwischen den beiden Teilräumen, die zunächst durch die Trennwand getrennt waren. Das fließfähige Medium kann im Trennfall dann in den weiteren Raum eintreten und es entsteht ein Druckausgleich, vorzugsweise über die Lüftungsöffnung. Dies erhöht die Trennsicherheit, da in dem Raum, der dem Hilfsantrieb abgewandt ist, kein Überdruck entsteht. Andererseits wird im Normalfall verhindert, dass das Medium aus der Entlüftungsöffnung austreten kann.

Wenn die Entlüftungsöffnung zwischen Hilfsantrieb und Trennstelle angeordnet ist, kann ein Gas, welches in diesem Raum angeordnet ist, nach der Aktivierung des Hilfsantriebs den Raum verlassen. Das bewirkt, dass das kompressible Gas den Bereich zwischen Hilfsantrieb und Trennstelle verlässt und die Energie des Hilfsantriebs im Wesentlichen auf das fließfähige Medium wirkt, so dass ein sicheres Trennen bewirkt wird. Dies ist insbesondere bei der Verwendung eines Bolzens oder Stifts, wie nachfolgend noch beschrieben wird, sinnvoll.

Ist die Öffnung auf der dem Hilfsantrieb abgewandten Seite der Trennstelle angeordnet, so kann ein Überdruck, der entsteht, wenn die Trennstelle getrennt wird, besonders einfach aus dem Raum entweichen und das in dem auf der dem Hilfsantrieb abgewandten Seite der Trennstelle vorhandene Gas kann keinen Gegendruck auf die Trennstele ausüben, welcher ein sicheres Trennen verhindern könnte.

Um ein sicheres Trennen zu bewirken, muss die Trennstelle eine geringere Bruchfestigkeit aufweisen, als das Gehäuse oder die Anschlussteile. Aus diesem Grunde wird vorgeschlagen, dass die Trennstelle eine Sollbruchstelle ist, wobei die Sollbruchstelle insbesondere zumindest eine Verjüngung der Trennstelle oder eine Lötstelle zwischen den Anschlussteilen ist. Entlang der Trennstelle soll die Trennlinie zwischen den Anschlussteilen verlaufen und sich der Spalt zwischen den Anschlussteilen bilden, der den Strompfad trennt. Dieser Spalt läuft entlang der Trennstelle. Die Sollbruchstelle kann beispielsweise eine Verjüngung entlang einer Linie über die Oberfläche eines Anschlussteils sein. Auch können Anschlussteile miteinander verlötet sein und so die Trennstelle bilden. Auch ist es möglich, dass die Trennstelle an zumindest zwei Punkten jeweils verjüngt mit jeweils einem Anschlussteil verbunden ist und die Verjüngungen durch den Druck des fließfähigen Mediums aufgebrochen werden und die Trennstelle von den Anschlussteilen gelöst wird.

Um eine saubere Biegelinie an der Trennstelle zu ermöglichen, wird vorgeschlagen, dass die Trennstelle gegenüber einem jeweiligen Anschlussteil gekerbt ist, derart, dass die jeweilige Kerbe entlang einer Sollbiegelinie der Trennstelle verläuft. Die Sollbiegelinie definiert, wo die Trennstelle gebogen werden soll. Hierdurch kann genau definiert werden, welchen Raum die Trennstelle beim Öffnen einnimmt, so dass dieser Raum in dem Führungsgehäuse zur Verfügung gestellt werden kann. Auch lässt sich somit die notwendige Kraft besser bestimmen, die auf die Trennstelle ausgeübt werden muss, bis sie aufbricht.

Wie bereits erläutert, ist insbesondere bei Hochvoltanwendungen das Unterdrücken eines Lichtbogens relevant. Jedoch auch ist das Unterbrechen eines Lichtbogens dann relevant, wenn hohe Ströme über die Anschlussteile fließen. Aus diesem Grunde wird vorgeschlagen, dass die Trennstelle eine Stromtragfähigkeit von über 10 A, bevorzugt von über 20 A, besonders bevorzugt von über 100 A aufweist. In diesem Fall ist die Trennstelle geeignet, Ströme von Elektroantrieben zu tragen. Auch ist die Trennstelle geeignet, Starterströme und Startern von Verbrennungsmotoren zu tragen.

Gemäß einem vorteilhaften Ausführungsbeispiel wird vorgeschlagen, dass über der Trennstelle nach dem Trennen eine Potenzialdifferenz von über 24 Volt, bevorzugt von über 100 Volt anliegt. Gerade bei Hochvoltanwendungen ist das Entstehen von Lichtbögen ein Problem, so dass die gegenständliche Trennvorrichtung gerade bei solchen Anwendungen relevant ist.

Um die von dem Hilfsantrieb im Aktivierungsfall abgegebene Energie besonders effizient auf das fließfähige Medium zu lenken, wird vorgeschlagen, dass in dem Raum ein entlang der axialen Ausbreitungsrichtung des Raums verschiebbarer Bolzen oder Stift angeordnet ist. Der Bolzen und der Stift kann durch den Druckimpuls des Hilfsantriebs in Richtung des fließfähigen Mediums beschleunigt werden und auf dieses einen Druck ausüben, der ausreicht, die Trennstelle zu trennen. Außerdem wird durch den Bolzen verhindert, dass eine Gasblase, welche sich beispielsweise vor dem Hilfsantrieb im Fall der Aktivierung bildet, durch das fließfähige Medium hindurch in Richtung der Endstelle bewegt, ohne dass das fließfähige Medium ausreichend in Richtung der Trennstelle beschleunigt ist.

Gemäß einem vorteilhaften Ausführungsbeispiel wird auch vorgeschlagen, dass der Bolzen oder der Stift getrieben durch den Hilfsantrieb das fließfähige Medium in Richtung der Trennstelle beschleunigt oder den Druck innerhalb des fließfähigen Mediums erhöht.

Ein weiterer Aspekt ist eine Hochvoltelektroinstallation mit einer Trennvorrichtung, wie sie zuvor beschrieben wurde.

Ein weiterer Gegenstand ist ein Elektrofahrzeug, insbesondere Hybridfahrzeug, mit einem elektrischen Antriebsbordnetz und einer in dem Antriebsbordnetz angeordneten Trennvorrichtung, wie sie zuvor beschrieben wurde.

Ein weiterer Aspekt ist ein Verfahren zum elektrischen Trennen zweier Anschlussteile mit Hilfe einer Trenneinheit, wobei ein Hilfsantrieb aktiviert wird, der Hilfsantrieb einen Druck auf ein fließfähiges Medium derart ausübt, dass mittels des fließfähigen Mediums eine Trennung der Trennvorrichtung bewirkt wird, und das fließfähige Medium im Moment der Trennung zumindest Teile der Trennvorrichtung zumindest teilweise umgibt.

Auch wird vorgeschlagen, dass ein sich zwischen den Anschlussteilen sich im Moment der Trennung bildender Lichtbogen durch das fließfähige Medium gelöscht wird oder die Entstehung des Lichtbogens durch das fließfähige Medium unterdrückt wird.

Die Merkmale der unabhängigen Ansprüche können frei miteinander als auch mit allen Merkmalen der abhängigen Ansprüche kombiniert werden. Außerdem können alle Merkmale der abhängigen Ansprüche frei miteinander, insbesondere unter Umgehung der Merkmale der unabhängigen Ansprüche, kombiniert werden und können dabei ebenfalls erfinderische Kombinationen ergeben.

Nachfolgend wird der Gegenstand anhand einer Ausführungsbeispiele zeigenden Zeichnung näher erläutert. In der Zeichnung zeigen:
- Fig. 1: eine erste Trennvorrichtung gemäß einem ersten Ausführungsbeispiel im nicht aktivierten Zustand;
- Fig. 2: die Trennvorrichtung gemäß Fig. 1 im aktivierten Zustand;
- Fig. 3: eine zweite Trennvorrichtung gemäß einem zweiten Ausführungsbeispiel im nicht aktivierten Zustand;
- Fig. 4: die Trennvorrichtung gemäß Fig. 3 im aktivierten Zustand;
- Fig. 5: eine dritte Trennvorrichtung gemäß einem dritten Ausführungsbeispiel in einem nicht aktivierten Zustand;
- Fig. 6: die Trennvorrichtung gemäß Fig. 5 im aktivierten Zustand;
- Fig. 7: eine weitere Trennvorrichtung gemäß einem weiteren Ausführungsbeispiel im nicht aktivierten Zustand;
- Fig. 8: die Trennvorrichtung gemäß Fig. 7 im aktivierten Zustand;
- Fig. 9: ein Elektrofahrzeug mit einer gegenständlichen Trennvorrichtung;

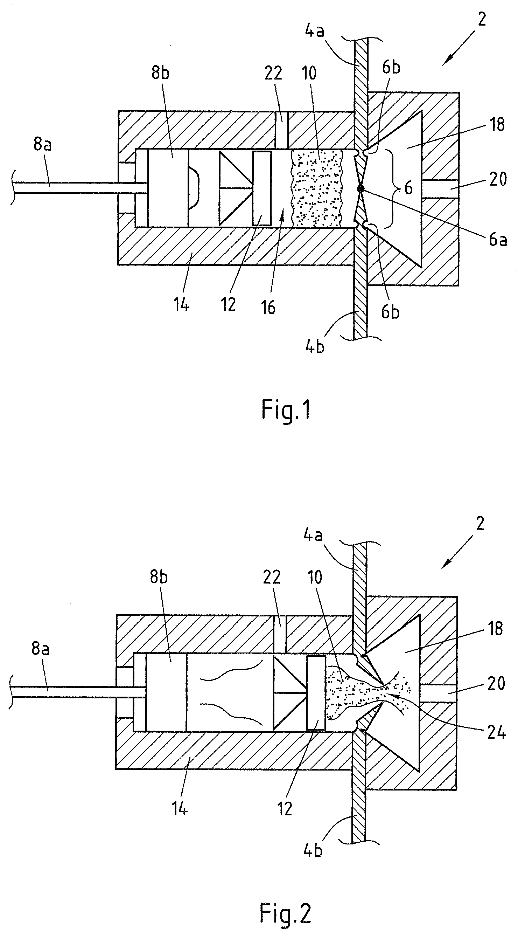

Fig. 1 zeigt eine Trennvorrichtung 2 mit einem Gehäuse 14. In das Gehäuse 14 ragen zwei Anschlussteile 4a und 4b hinein, über die ein Strompfad über eine Trennstelle 6 verläuft und über die ein Strom von mehreren 10 A fließen kann. Die Trennstele 6 weist eine Sollbruchstelle 6a auf, die gemäß Fig. 1 eine Lötstelle ist.

In dem Gehäuse 14 ist ein über ein Zünddraht 8a ansteuerbarer und pyrotechnischer Hilfsantrieb 8b angeordnet. Zwischen dem pyrotechnischen Hilfsantrieb 8b und der Trennstelle 6 ist ein Bolzen 12 angeordnet, der entlang der axialen Richtung des Führungsgehäuses 14 in einem Kanal des Führungsgehäuses 14 beweglich ist. Ferner ist zwischen dem Hilfsantrieb 8b und der Trennstelle 6 ein fließfähiges Medium 10 angeordnet.

Das fließfähige Medium 10 kann eine Flüssigkeit, ein Gel oder ein rieselfähiges Schüttgut sein. Beispielsweise kann das fließfähige Medium 10 ein Silikon oder Sand sein. Zwischen dem Bolzen 12 und der Trennstelle 6 ist ein Zwischenraum 16 gebildet, der wie dargestellt zumindest teilweise mit dem fließfähigem Medium 10 gefüllt sein kann.

In dem Zwischenraum 16 kann ein Gas zwischen dem Bolzen 12 und dem fließfähigen Medium 10 vorhanden sein. Um dieses Gas im Aktivierungsfall entlüften zu können, ist eine Entlüftungsöffnung 22 vorgesehen. Die Entlüftungsöffnung 22 ist so klein, dass das fließfähige Medium 10 hieraus nicht entweichen kann. Jedoch ist die Entlüftungsöffnung 22 so groß, dass ein Gasüberdruck aus dem Raum 16 entweichen kann.

Auf der dem Hilfsantrieb 8b abgewandten Seite der Trennstelle 6 ist ebenfalls ein Raum 18 vorgesehen, in dem eine Entlüftungsöffnung 20 angeordnet sein kann. Zu erkennen ist, dass an der Trennstelle 6 im Bereich des Innenumfangs des Führungsgehäuses 14 Einkerbungen 6b vorgesehen sein können, die Sollbiegelinien definieren, entlang die Trennstelle 6 gebogen werden soll.

Ferner ist zu erkennen, dass der Raum 18 ein sich radial vergrößerndes Volumen aufweist, in das die Trennstelle 6 verbogen werden kann, wie nachfolgend gezeigt werden wird.

Fig. 2 zeigt die Trennvorrichtung 2 gemäß Fig. 1 im ausgelösten Zustand. Im ausgelösten Zustand ist über den Zünddraht 8a ein Zündimpuls an dem Hilfsantrieb 8b geleitet worden, der daraufhin explodiert. Die Explosionsenergie wirkt als Druckimpuls auf dem Bolzen 12. Der Bolzen 12 wird in Richtung des fließfähigen Mediums 10 beschleunigt. Ein Gas im Zwischenraum zwischen Bolzen 12 und fließfähigen Medium 10 kann über die Entlüftungsöffnung 22 entlüftet werden, so dass das Gas nicht oder nur gering bremsend auf den Bolzen 12 wirkt.

Der Bolzen 12 trifft auf das fließfähige Medium 10 und beschleunigt dieses in Richtung der Trennstelle 6. Wie zu erkennen ist, reicht der Druck und der Impuls des fließfähigen Mediums 10 aus, die Trennstelle 6 aufzubrechen, so dass ein Spalt 24 zwischen den Anschlussteilen 4a, 4b entsteht. In diesen Spalt 24 dringt das fließfähige Medium 10 ein.

Im Moment des Trennens der Anschlussteile 4a, 4b über die Trennstelle 6 entsteht ein Lichtbogen über den Spalt 24. Dieser Lichtbogen wird unmittelbar beim Entstehen durch das fließfähige Medium 10 gelöscht oder es wird komplett unterdrückt, dass ein Lichtbogen entstehen kann. Der in dem Gehäuse 18 entstehende Überdruck, der durch das Verbiegen der Trennstelle 6 in der gezeigten Form entsteht, kann über die Entlüftungsöffnung 20 entweichen.

Mit Hilfe des fließfähigen Mediums 10 ist es möglich, dass Entstehen eines Lichtbogens entlang des Spalts 24 zu verhindern oder einen entstandenen Lichtbogen zu löschen.

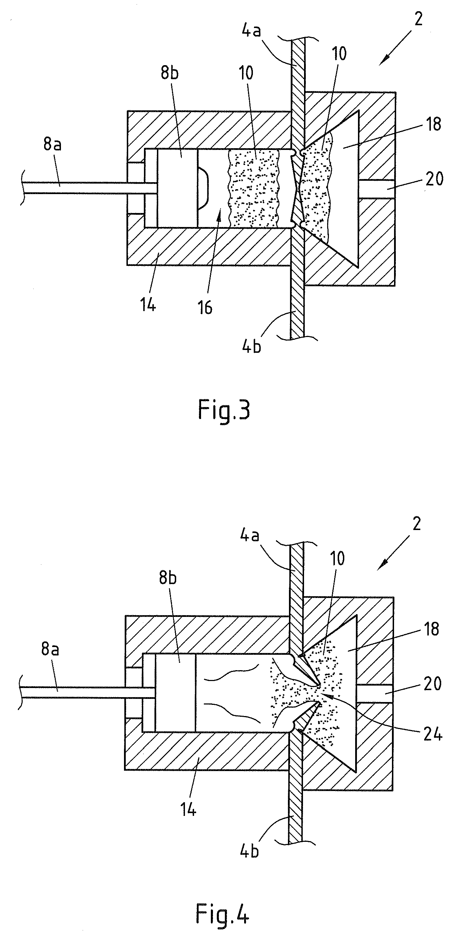

Fig. 3 zeigt ein weiteres Ausführungsbeispiel einer Trennvorrichtung 2, bei der das fließfähige Medium 10 auch auf der dem Hilfsantrieb 8b abgewandten Seite der Trennstelle 6 im Raum 18 angeordnet ist. Ferner ist zu erkennen, dass anders als bei dem Ausführungsbeispiel gemäß Fig. 1 die Trennstelle 6 im Bereich der Sollbruchstelle 6a nicht verlötet ist, sondern lediglich verjüngt.

Beim Auslösen der Trennvorrichtung 2 gemäß Fig. 3 wird die Trennstelle 6, wie es in Fig. 4 gezeigt ist, ebenfalls getrennt.

Fig. 4 zeigt die Trennvorrichtung 2 gemäß Fig. 3 im ausgelösten Zustand. Zu erkennen ist, dass der Hilfsantrieb 8b gezündet wurde und das fließfähige Medium 10 derart auf die Trennstelle 6 beschleunigt hat, dass diese die Trennstelle 6 trennt und der Spalt 24 entsteht. Ferner ist zu erkennen, dass das fließfähige Medium 10 den Spalt 24 an der Trennstelle 6 komplett umgibt, und ein entstehender Lichtbogen gelöscht werden kann.

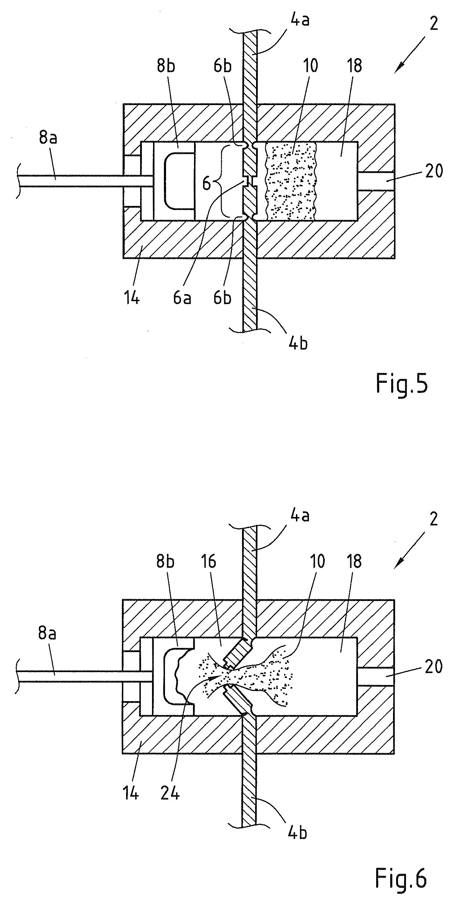

Fig. 5 zeigt ein weiteres Ausführungsbeispiel einer Trennvorrichtung 2, bei der das fließfähige Medium 10 ausschließlich auf der dem Hilfsantrieb 8b abgewandten Seite der Trennstelle 6 angeordnet ist. Auch in dem in Fig. 5 gezeigten Beispiel weist die Trennstelle 6 eine als Verjüngung ausgebildete Sollbruchstelle 6a auf. Der Hilfsantrieb 8b ist derart, dass er bei einer Aktivierung implodiert und einen Unterdruck in dem Raum 16 bewirkt.

Eine aktivierte Trennvorrichtung gemäß Fig. 5 ist in Fig. 6 dargestellt. Zu erkennen ist, dass durch den in dem Raum 16 entstehenden Unterdruck die Trennstelle 6 aufbricht und ein Spalt 24 zwischen den Anschlussteilen 4a, 4b entsteht. In diesen Spalt 24 dringt das fließfähige Medium 10 im Moment des Trennens ein, welches vor der Implosion in dem Raum 18 angeordnet war. Über die Belüftungsöffnung 20 kann Gas in das Innere des Raums 18 gelangen, so dass das Unterdruck in dem Raum 16 dazu führt, dass die Trennstelle 6 aufbricht und sich der Spalt 24 ausbildet. Auch hier ist zu erkennen, dass das fließfähige Medium 10 sich in dem Bereich des Spalts 24 befindet und ein entstehender Lichtbogen gelöscht werden kann.

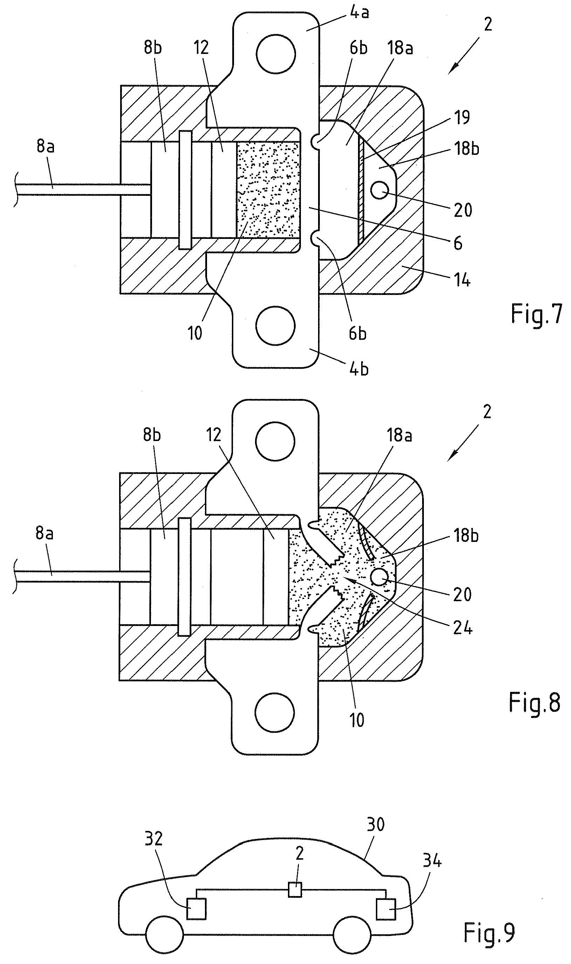

Fig. 7 zeigt eine weitere Trennvorrichtung gemäß einem weiteren Ausführungsbeispiel.

Bei der gezeigten Trennvorrichtung 2 sind die Anschlussteile 4a, 4b, als Flachteile gebildet und weisen jeweils Bohrungen auf, zum Anschluss von Kabeln, insbesondere durch Schrauben.

In dem Führungsgehäuse 14 ist eine pyrotechnische Zündpille 8b angeordnet, die über einen Zünddraht 8a angesteuert wird.

In einem Kanal zwischen der Zündpille 8b und der Trennstelle 6 befindet sich unmittelbar an der Zündpille 8b ein Bolzen 12. Zwischen dem Bolzen 12 und der Trennstelle 6 ist das fließfähige Medium 10 vorgesehen.

Das fließfähige Medium 10 ist vorzugsweise ein Silikongel. Dieses Silikongel ist pastös, gelförmig. Das fließfähige Medium 10 liegt unmittelbar an der Trennstelle 6 an und führt zu einer Wärmeableitung der jouleschen Wärme an der Trennstelle 6, die durch den Stromfluss zwischen den Anschlussteilen 4a und 4b entsteht. Hierdurch wird die Stromtragfähigkeit der Trennstelle 6 deutlich erhöht. Auf der der Zündpille 8b abgewandten Seite der Trennstelle 6 befindet sich ein Raum 18, der in zwei Teilräume 18a und 18b unterteilt ist. Die Teilräume 18a und 18b sind durch eine Trennwand 19 voneinander getrennt. Die Trennwand 19 kann eine Membran oder eine sonstige dünne Haut, ein dünnes, vorzugsweise mit einem Isolator beschichtetes Blech oder eine Kunststoffabdeckung oder Kunststoffplatte sein, die den Teilraum 18a gegenüber dem Teilraum 18b abdichtet, sodass durch die Öffnung 20 von außen eindringende Feuchtigkeit oder sonstige Umwelteinflüsse nicht in den Teilraum 18a eindringen und insbesondere keine Korrosion an der Trennstelle 6 bewirkt.

Die Trennwand 19 ist vorzugsweise flexibel und dient zum Einen zur Abdichtung des Teilraums 18b gegenüber dem Teilraum 18a, zum Anderen jedoch auch zur Aufnahme des im Aktivierungsfall entstehenden Überdrucks im Teilraum 18a, indem sich die Trennwand 19 verbiegt oder gar aufreißt und somit einen Drucküberschuss in den Teilraum 18a durch die Öffnung 20 entlüftet.

Im Teilraum 18a kann ebenfalls das fließfähige Medium 10 angeordnet sein. Hierdurch wird die Stromtragefähigkeit über die Trennstelle 6 weiter erhöht, da eine weiter verbesserte Wärmeableitung gewährleistet wird.

Im Aktivierungsfall wird die Zündpille 8b gezündet, woraufhin der Bolzen 12 in Richtung des fließfähigen Mediums 10 beschleunigt wird. Das fließfähige Medium 10 übt einen Trenndruck auf die Trennstelle 6 derart aus, dass die Trennstelle 6 aufbricht. Die Trennstelle 6 wird entlang der Einkerbungen 6b verbogen und erstreckt sich in den Teilraum 18a. Das fließfähige Medium 10 strömt im Moment des Trennens in den Spalt 24, wie in Figur 8 dargestellt ist. Ein stehender Lichtbogen im Spalt 24 wird durch das Silikongel gelöscht. Das Silikongel bildet als Verwendungsprodukt Siliziumoxid, welches sehr gute Fluktuationseigenschaften aufweist. Beim Verbrennen des Silikongels entstehen nur geringe Rauchmengen, Kohlendioxid und Wasser ohne toxische Gase. Da der Sauerstoffindex über 21 % liegt, ist das Silikongel schwer brennbar. Der entstehende Lichtbogen wird somit unmittelbar gelöscht.

Wie in Fig. 8 ferner zu erkennen ist, wird die Trennwand 19 durch den entstehenden Überdruck aufgebrochen und Silikongel 10 fließt in die Teilräume 18a und 18b. Durch die Öffnung 20 erfolgt eine Entlüftung derart, dass ein Überdruck in den Teilräumen 18a, 18b, entweichen kann. Dies fördert die Trennfähigkeit der Trennvorrichtunginnerung, da dem durch das fließfähige Medium 10 auf die Trennstelle 6 wirkenden Druck nur ein geringer Gegendruck entgegensteht.

Mit Hilfe der in den Fig. 7 und 8 gezeigten Trennvorrichtungen wird das Trennverhalten weiter verbessert und die Entlüftungsöffnung 20 gegenüber der Trennstelle 6 abgedichtet, was die Lebensdauer der Trennvorrichtung deutlich erhöht.

Fig. 9 zeigt ein Elektrofahrzeug 30 mit einer Antriebsbatterie 32 und einem elektrischen Antrieb 34. Zwischen der Antriebsbatterie 32 und dem elektrischen Antrieb 34 ist die Trennvorrichtung 2 angeordnet. Im Fall eines Unfalls des Fahrzeugs 30 kann die elektrische Trennvorrichtung 2 angesteuert werden und der Strompfad zwischen der Batterie 32 und dem Antrieb 34 kann getrennt werden. Die Trennvorrichtung 2 kann dabei besonders nah an der Batterie 32 angeordnet werden, beispielsweise unmittelbar an den Batteriepolen. Hierdurch wird sichergestellt, dass die Gefährdung für Insassen und Rettungspersonen minimiert ist.

## Patentansprüche

1. Elektrische Trennvorrichtung mit
- einem ersten Anschlussteil (4a),
- einem zweiten Anschlussteil (4b),
- einer im geschlossenen Zustand einen Strompfad zwischen dem ersten und dem zweiten Anschlussteil (4a, 4b) bildenden, räumlich zwischen den Anschlussteilen liegenden Trennstelle (6),
- wobei die Trennstelle (6) im getrennten Zustand den Strompfad zwischen den Anschlussteilen (4a, 4b) trennt, und
- einem ein Trennen der Trennstelle (6) beeinflussenden Hilfsantrieb (8),
- wobei ein durch den Hilfsantrieb (8) getriebenes, fließfähiges Medium (10) derart angeordnet ist, dass es die Trennstelle (6) zumindest im Moment des Trennens zumindest teilweise umgibt,
- und ein Führungsgehäuse (14) einen zwischen Hilfsantrieb (8) und Trennstelle (6) und/oder einen auf einer dem Hilfsantrieb (8) abgewandten Seite der Trennstelle (6) angeordneten Raum (16, 18) aufweist,
- **dadurch gekennzeichnet, dass** in dem Führungsgehäuse (14) ein entlang der axialen Ausbreitungsrichtung des Führungsgehäuses (14) verschiebbarer Bolzen oder Stift angeordnet ist, und
- dass der Bolzen oder Stift getrieben durch den Hilfsantrieb (8) das fließfähige Medium (10) in Richtung der Trennstelle (6) beschleunigt oder den Druck innerhalb des fließfähigen Mediums (10) erhöht.

2. Trennvorrichtung nach Anspruch 1, **dadurch gekennzeichnet, dass** das fließfähige Medium (10) einen die Trennung bewirkenden Druck und/oder Impuls auf die Trennstelle (6) ausübt und/oder dass das fließfähige Medium (10) im Moment des Trennens an der Trennstelle (6) anliegt.

3. Trennvorrichtung nach Anspruch 1 oder 2, **dadurch gekennzeichnet, dass** das fließfähige Medium (10) durch den Hilfsantrieb (8) in Richtung der Trennstelle (6) die Trennung bewirkend beschleunigt ist.

4. Trennvorrichtung nach einem der Ansprüche 1 bis 3,
**dadurch gekennzeichnet, dass** das fließfähige Medium (10) in einem Führungsgehäuse (14) zwischen der Trennstelle (6) und dem Hilfsantrieb (8) und/oder an einer dem Hilfsantrieb (8) abgewandten Seite der Trennstelle (6) angeordnet ist.

5. Trennvorrichtung nach einem der Ansprüche 1 bis 4,
**dadurch gekennzeichnet, dass** das fließfähige Medium (10) eine Flüssigkeit oder ein rieselfähiges Schüttgut, insbesondere Sand, ist und/oder dass das fließfähige Medium (10) flüssig, pastös, schaumförmig, gelförmig oder gekörnt ist.

6. Trennvorrichtung nach einem der Ansprüche 1 bis 5,
**dadurch gekennzeichnet, dass** das fließfähige Medium (10) elektrisch isolierende Eigenschaften aufweist und/oder einen Lichtbogen löschende Eigenschaften aufweist.

7. Trennvorrichtung nach einem der Ansprüche 1 bis 6,
**dadurch gekennzeichnet, dass** der Hilfsantrieb (8) ein pyrotechnischer Hilfsantrieb (8) oder ein mechanischer Hilfsantrieb (8) ist und/oder dass der Hilfsantrieb (8) einen Unterdruck oder Überdruck in einem Führungsgehäuse (14) nach seiner Aktivierung auslöst.

8. Trennvorrichtung nach Anspruch 1, **dadurch gekennzeichnet, dass** der Raum (16, 18) zumindest teilweise mit dem fließfähigen Medium (10) gefüllt ist.

9. Trennvorrichtung nach einem der Ansprüche 1 bis 8,
**dadurch gekennzeichnet, dass** im Bereich des Raums (16, 18) eine Entlüftungsöffnung (18, 20) vorgesehen ist, über die ein im Raum (16, 18) eingeschlossenes Gas bei einem Überdruck im Raum (16, 18) entweicht.

10. Trennvorrichtung nach einem der Ansprüche 1 bis 9,
**dadurch gekennzeichnet, dass** der auf einer dem Hilfsantrieb abgewandten Seite der Trennstelle angeordneter Raum zwei Teilräume umfasst, wobei ein erster Teilraum an der Trennstelle anliegt und ein zweiter Teilraum gegenüber der Trennstelle durch eine Trennwand abgedichtet ist und vorzugsweise in dem zweiten Teilraum die Entlüftungsöffnung vorgesehen ist.

11. Trennvorrichtung nach einem der Ansprüche 1 bis 11,
**dadurch gekennzeichnet, dass** die Trennstelle (6) eine Sollbruchstelle (6a) aufweist, wobei die Sollbruchstelle (6a) insbesondere zumindest eine Verjüngung der Trennstelle (6) oder eine Lötstelle zwischen den Anschlussteilen aufweist.

12. Trennvorrichtung nach einem der Ansprüche 1 bis 11,
**dadurch gekennzeichnet, dass** die Trennstelle (6) gegenüber einem jeweiligen Anschlussteil (4a, 4b) gekerbt ist, derart, dass die jeweilige Kerbe entlang einer Sollbiegelinie der Trennstelle (6) verläuft.

13. Trennvorrichtung nach einem der Ansprüche 1 bis 12,
**dadurch gekennzeichnet, dass** die Anschlussteile und die Trennstelle (6) eine Stromtragfähigkeit von über 10 Ampere, bevorzugt von über 20 Ampere, besonders bevorzugt von über 100 Ampere aufweist.

14. Trennvorrichtung nach einem der Ansprüche 1 bis 13,
**dadurch gekennzeichnet, dass** über der Trennstelle (6) der Trennvorrichtung beim Trennen eine Potentialdifferenz von über 24V, bevorzugt von über 100V anliegt.

15. Hochvoltelektroinstallation mit einer Trennvorrichtung nach einem der Ansprüche 1 bis 16.

16. Elektrofahrzeug, insbesondere Hybridfahrzeug mit einem elektrischen Antriebsbordnetz und einer in dem Antriebsbordnetz angeordneten Trennvorrichtung nach einem der Ansprüche 1 bis 16.

17. Verfahren zum elektrischen Trennen zweier Anschlussteile mit Hilfe einer Trennvorrichtung, wobei
- ein Hilfsantrieb (8) aktiviert wird,
- der Hilfsantrieb (8) einen Druck auf ein fließfähiges Medium (10) derart ausübt, dass mittels des fließfähigen Medium (10)s eine Trennung der Trennvorrichtung bewirkt wird,
- dass fließfähige Medium (10) im Moment der Trennung zumindest Teile der Trennvorrichtung zumindest teilweise umgibt,
- dass ein Führungsgehäuse (14) einen zwischen Hilfsantrieb (8) und Trennstelle (6) und/oder einen auf einer dem Hilfsantrieb (8) abgewandten Seite der Trennstelle (6) angeordneten Raum (16, 18) aufweist,
- dass in dem Führungsgehäuse (14) ein entlang der axialen Ausbreitungsrichtung des Führungsgehäuses (14) verschiebbarer Bolzen oder Stift geführt wird, und
- dass der Bolzen oder Stift getrieben durch den Hilfsantrieb (8) das fließfähige Medium (10) in Richtung der Trennstelle (6) beschleunigt oder den Druck innerhalb des fließfähigen Mediums (10) erhöht.

18. Verfahren nach Anspruch 17, **dadurch gekennzeichnet, dass** ein sich zwischen den Anschlussteilen sich im Moment der Trennung bildender Lichtbogen durch das fließfähige Medium (10) gelöscht wird oder die Entstehung des Lichtbogens durch das fließfähige Medium (10) unterdrückt wird.

## Claims

1. Electrical disconnecting device comprising
- a first connecting part (4a),
- a second connecting part (4b),
- a disconnection point (6) which in the closed state forms a current path between the first and the second connecting parts (4a, 4b) and is located spatially between the connecting parts,
- wherein in the isolated state the disconnection point (6) isolates the current path between the connecting parts (4a, 4b),
and
- an auxiliary drive (8) which influences isolation of the disconnection point (6),
wherein
- a flowable medium (10) driven by the auxiliary drive (8) is disposed in such a way that it surrounds the disconnection point (6) at least partially at least at the moment of isolation, and
- a guide housing (14) has a space (16, 18) disposed between the auxiliary drive (8) and the disconnection point (6) and/or on a side of the disconnection point (6) turned away from the auxiliary drive (8),
**characterised in that**
- in the guide housing (14) a bolt or pin is disposed that can be displaced in the axial direction of extension of the guide housing (14), and
- the bolt or pin driven by the auxiliary drive (8) accelerates the flowable medium (10) in the direction of the disconnection point (6) or increases the pressure within the flowable medium (10).

2. Disconnecting device according to claim 1, **characterised in that** the flowable medium (10) exerts a pressure and/or pulse on the disconnection point (6) that brings about the isolation and/or that the flowable medium (10) bears on the disconnection point (6) immediately prior to isolation.

3. Disconnecting device according to claim 1 or 2, **characterised in that** the flowable medium (10) is accelerated by the auxiliary drive (8) in the direction of the disconnection point (6) bringing about the isolation.

4. Disconnecting device according to any one of claims 1 to 3, **characterised in that** the flowable medium (10) is disposed in a guide housing (14) between the disconnection point (6) and the auxiliary drive (8) and/or at a side of the disconnection point (6) turned away from the auxiliary drive (8).

5. Disconnecting device according to any one of claims 1 to 4, **characterised in that** the flowable medium (10) is a liquid or a free-flowing bulk material, in particular sand, and/or that the flowable medium (10) is liquid, paste-like, foam-like, gel-like or granular.

6. Disconnecting device according to any one of claims 1 to 5, **characterised in that** the flowable medium (10) has electrically insulating properties and/or arc extinguishing properties.

7. Disconnecting device according to any one of claims 1 to 6, **characterised in that** the auxiliary drive (8) is a pyrotechnical auxiliary drive (8) or a mechanical auxiliary drive (8) and/or that the auxiliary drive (8) brings about a depression or overpressure in a guide housing (14) following its activation.

8. Disconnecting device according to claim 1, **characterised in that** the space (16, 18) is at least partially filled with the flowable medium (10).

9. Disconnecting device according to any one of claims 1 to 8, **characterised in that** in the area of the space (16, 18) a vent opening (18, 20) is provided, via which the gas enclosed in the space (16, 18) can escape in the event of overpressure in the space (16, 18).

10. Disconnecting device according to any one of claims 1 to 9, **characterised in that** the space disposed on a side of the disconnection point turned away from the auxiliary drive comprises two chambers, wherein a first chamber bears on the disconnection point and a second chamber is sealed with respect to the disconnection point by a dividing wall and preferably the vent opening is provided in the second chamber.

11. Disconnecting device according to any one of claims 1 to 10, **characterised in that** the disconnection point (6) has a predetermined breaking point (6a), wherein the predetermined breaking point (6a) in particular comprises at least one tapering of the disconnection point (6) or one soldered joint between the connecting parts.

12. Disconnecting device according to any one of claims 1 to 11, **characterised in that** the disconnection point (6) is notched in respect of each connecting part (4a, 4b), in such a way that the respective notch runs along a predetermined bending line of the disconnection point (6).

13. Disconnecting device according to any one of claims 1 to 12, **characterised in that** the connecting parts and the disconnection point (6) have a current-carrying capability of more than 10 Amps, preferably of more than 20 Amps, particularly preferably of more than 100 Amps.

14. Disconnecting device according to any one of claims 1 to 13, **characterised in that** across the disconnection point (6) of the disconnecting device following isolation a potential difference of more than 24 Volts, preferably of more than 100 Volts exists.

15. High voltage electrical installation with a disconnecting device according to any one of claims 1 to 14.

16. Electric vehicle, in particular a hybrid vehicle, with an onboard electrical drive system and a disconnecting device disposed within the onboard electrical drive system according to any one of claims 1 to 15.

17. Method for electrical isolation of two connecting parts with the aid of a disconnecting device, wherein
- an auxiliary drive (8) is activated,
- the auxiliary drive (8) exerts a pressure on a flowable medium (10) in such a way that by means of the flowable medium (10) isolation of the disconnecting device is brought about, and
- the flowable medium (10) at the moment of the isolation at least partially surrounds at least parts of the disconnecting device,
- a guide housing (14) has a space (16, 18) disposed between the auxiliary drive (8) and the disconnection point (6) and/or on a side of the disconnection point (6) turned away from the auxiliary drive (8),
- in the guide housing (14) a bolt or pin is disposed that can be displaced in the axial direction of extension of the guide housing (14),
- the bolt or pin driven by the auxiliary drive (8) accelerates the flowable medium (10) in the direction of the disconnection point (6) or increases the pressure within the flowable medium (10).

18. Method according to claim 17, **characterised in that** an arc forming between the connecting parts at the moment of isolation is extinguished by the flowable medium (10) or the occurrence of arcing is suppressed by the flowable medium (10).

## Revendications

1. Dispositif de sectionnement électrique comprenant
- une première partie de raccordement (4a),
- une seconde partie de raccordement (4b),
- une zone de sectionnement (6) formant, à l'état fermé, un passage de courant entre la première et la seconde partie de raccordement (4a, 4b) et se trouvant physiquement entre les parties de raccordement,
- où la zone de sectionnement (6), à l'état sectionné, coupe le passage de courant entre les parties de raccordement (4a, 4b), et
- une commande auxiliaire (8) influençant un sectionnement de la zone de sectionnement (6),
- où un milieu (10) à écoulement libre, entraîné par la commande auxiliaire (8), est disposé de manière telle, qu'il entoure au moins partiellement la zone de sectionnement (6) au moins au moment du sectionnement,
- et un carter de guidage (14) présente un espace (16, 18) disposé entre la commande auxiliaire (8) et la zone de sectionnement (6) et/ou un espace disposé sur un côté de la zone de sectionnement (6), placé à l'opposé de la commande auxiliaire (8),
**caractérisé**
**en ce qu'**un boulon ou un goujon mobile est disposé, dans le carter de guidage (14), le long de la direction d'étendue axiale du carter de guidage (14), et
**en ce que** le boulon ou le goujon accélère le milieu (10) à écoulement libre, entraîné par la commande auxiliaire (8), en direction de la zone de sectionnement (6), ou bien augmente la pression à l'intérieur du milieu (10) à écoulement libre.

2. Dispositif de sectionnement selon la revendication 1, **caractérisé en ce que** le milieu (10) à écoulement libre exerce une pression provoquant le sectionnement et/ou déclenche une impulsion sur la zone de sectionnement (6) et/ou **en ce que** le milieu (10) à écoulement libre vient en appui sur la zone de sectionnement (6) au moment du sectionnement.

3. Dispositif de sectionnement selon la revendication 1 ou 2, **caractérisé en ce que** le milieu (10) à écoulement libre, sous l'effet de la commande auxiliaire (8), est accéléré en direction de la zone de sectionnement (6), ce qui provoque le sectionnement.

4. Dispositif de sectionnement selon l'une quelconque des revendications 1 à 3, **caractérisé en ce que** le milieu (10) à écoulement libre est disposé, dans un carter de guidage (14), entre la zone de sectionnement (6) et la commande auxiliaire (8), et/ou sur un côté de la zone de sectionnement (6), placé à l'opposé de la commande auxiliaire (8).

5. Dispositif de sectionnement selon l'une quelconque des revendications 1 à 4, **caractérisé en ce que** le milieu (10) à écoulement libre est un liquide ou une matière en vrac à écoulement libre, en particulier du sable, et/ou **en ce que** le milieu (10) à écoulement libre est liquide, pâteux, moussant, se présentant sous forme de gel ou en granulés.

6. Dispositif de sectionnement selon l'une quelconque des revendications 1 à 5, **caractérisé en ce que** le milieu (10) à écoulement libre présente des propriétés électroisolantes et/ou présente des propriétés permettant d'éteindre un arc électrique.

7. Dispositif de sectionnement selon l'une quelconque des revendications 1 à 6, **caractérisé en ce que** la commande auxiliaire (8) est une commande auxiliaire (8) pyrotechnique ou une commande auxiliaire (8) mécanique et/ou **en ce que** la commande auxiliaire (8) déclenche, après son activation, une dépression ou une surpression dans un carter de guidage (14).

8. Dispositif de sectionnement selon la revendication 1, **caractérisé en ce que** l'espace (16, 18) est rempli au moins partiellement du milieu (10) à écoulement libre.

9. Dispositif de sectionnement selon l'une quelconque des revendications 1 à 8, **caractérisé en ce qu'**il est prévu, dans la zone de l'espace (16, 18), une ouverture de ventilation (18, 20) par laquelle s'échappe un gaz confiné dans l'espace (16, 18), en cas de surpression dans l'espace (16, 18).

10. Dispositif de sectionnement selon l'une quelconque des revendications 1 à 9, **caractérisé en ce que** l'espace disposé sur un côté de la zone de sectionnement, placé à l'opposé de la commande auxiliaire, comprend deux espaces partiels, où un premier espace partiel vient en appui sur la zone de sectionnement et un second espace partiel est rendu étanche par rapport à la zone de sectionnement, par une paroi de séparation, et l'ouverture de ventilation est prévue de préférence dans le second espace partiel.

11. Dispositif de sectionnement selon l'une quelconque des revendications 1 à 10, **caractérisé en ce que** la zone de sectionnement (6) présente un point destiné à la rupture (6a), où le point destiné à la rupture (6a) présente en particulier au moins un rétrécissement - de forme conique - de la zone de sectionnement (6) ou bien présente un point de brasage entre les parties de raccordement.

12. Dispositif de sectionnement selon l'une quelconque des revendications 1 à 11, **caractérisé en ce que** la zone de sectionnement (6) est entaillée par rapport à une partie de raccordement respective (4a, 4b), de manière telle que l'entaille respective s'étende le long d'une ligne destinée à la flexion de la zone de sectionnement (6).

13. Dispositif de sectionnement selon l'une quelconque des revendications 1 à 12, **caractérisé en ce que** les parties de raccordement et la zone de sectionnement (6) présentent une capacité de charge en courant supérieure à 10 ampères, de préférence supérieure à 20 ampères, de façon particulièrement préférable supérieure à 100 ampères.

14. Dispositif de sectionnement selon l'une quelconque des revendications 1 à 13, **caractérisé en ce qu'**une différence de potentiel supérieure à 24 V, de préférence supérieure à 100 V, s'applique au-dessus de la zone de sectionnement (6) du dispositif de sectionnement, lors du sectionnement.

15. Installation électrique à haute tension comprenant un dispositif de sectionnement selon l'une quelconque des revendications 1 à 14.

16. Véhicule électrique, en particulier véhicule hybride, comprenant un réseau de bord de commande électrique et un dispositif de sectionnement disposé dans le réseau de bord de commande selon l'une quelconque des revendications 1 à 15.

17. Procédé servant au sectionnement électrique de deux parties de raccordement, à l'aide d'un dispositif de sectionnement, où
- une commande auxiliaire (8) est activée,
- la commande auxiliaire (8) exerce une pression sur un milieu (10) à écoulement libre, de manière telle qu'un sectionnement du dispositif de sectionnement soit déclenché au moyen du milieu (10) à écoulement libre,
**caractérisé**
**en ce que** le milieu (10) à écoulement libre entoure au moins partiellement, au moment du sectionnement, au moins des parties du dispositif de sectionnement, en ce qu'un carter de guidage (14) présente un espace (16, 18) disposé entre la commande auxiliaire (8) et la zone de sectionnement (6) et/ou présente un espace (16, 18) disposé sur un côté de la zone de sectionnement (6), placé à l'opposé de la commande auxiliaire (8),
**en ce qu'**un boulon ou un goujon mobile est guidé, dans le carter de guidage (14), le long de la direction d'étendue axiale du carter de guidage (14), et
**en ce que** le boulon ou le goujon accélère le milieu (10) à écoulement libre, entraîné par la commande auxiliaire (8), en direction de la zone de sectionnement (6), ou bien augmente la pression à l'intérieur du milieu (10) à écoulement libre.

18. Procédé selon la revendication 17, **caractérisé en ce qu'**un arc électrique se formant entre les parties de raccordement au moment du sectionnement est éteint par le milieu (10) à écoulement libre, ou bien l'occurrence de l'arc électrique est empêchée par le milieu (10) à écoulement libre.
